# EUROPÄISCHE PATENTSCHRIFT

(11) **EP 0 433 472 B1**
(45) Veröffentlichungstag und Bekanntmachung des Hinweises auf die Patenterteilung: **17.04.1996**
(21) Anmeldenummer: 89123397.5
(22) Anmeldetag: 18.12.1989
(51) Int. Cl.: G06F 9/46, G06F 15/167

(54) **Verfahren zum gepufferten Datenaustausch zwischen Programmen einer Datenverarbeitungsanlage**
Method for buffered data exchange between programs of a data processing system
Méthode pour l'échange tamponné de données entre des programmes d'un système de traitement de données

(43) Veröffentlichungstag der Anmeldung: 26.06.1991
(73) Patentinhaber: SIEMENS AKTIENGESELLSCHAFT, D-80333 München (DE)
(72) Erfinder: Döbeling, Klaus, Dipl.-Math., D-8520 Erlangen (DE)

(56) Entgegenhaltungen:
- EP-A- 0 031 484
- EP-A- 0 077 008
- P.D. LAWRENCE et al.: "Real-Time Microcomputer System Design", 1987, Seiten 482-495, McGraw-Hill Book Co., New York, US
- RADIO FERNSEHEN ELEKTRONIK, Band 34, Nr. 7, Juli 1985, Seiten 445,456,462, Ost-Berlin, DD, D. HÖNTSCH et al.: "Echtzeitbetriebssystem KOMINET"
- IBM TECHNICAL DISCLOSURE BULLETIN, Band 29, Nr. 2, Juli 1986, Seiten 668-670, New York, US; ANONYMOUS: "Interrupt driven queueing for communication between two processors"

## Beschreibung

Die Erfindung bezieht sich auf ein Verfahren zum gepufferten Datenaustausch zwischen Programmen einer Datenverarbeitungsanlage mit folgenden Merkmalen:
a) Die Programme verfügen über einen Datenbereich, in dem die vom jeweiligen Programm benutzbaren Daten abgelegt sind,
b) die in einem jeweiligen Datenbereich eines sendebereiten Programms abgelegten Daten sind an einen Datenpuffer übergebbar,
c) die im Datenpuffer abgelegten Daten sind von empfangsbereiten Programmen abrufbar,
d) zum Datenaustausch werden sendebereite und/oder empfangsbereite Programme am Datenpuffer gemeldet.

Ein gepufferter Datenaustausch zwischen Programmen einer Datenverarbeitungsanlage ist immer dann sinnvoll, wenn zur Abarbeitung eines Gesamtprogramms einer Datenverarbeitungsanlage mehrere Programme oder auch Teilprogramme verwendet werden. Insbesondere in Echtzeit-Betriebssystemen und EchtzeitBetriebssystemkernen ist dabei häufig eine Datenpufferfunktion für die gepufferte Kommunikation von Programmen, die als Tasks bezeichnet werden, vorgesehen. Ein Task ist dabei aus der Sicht des Betriebssystems eine in sich geschlossene Ablaufeinheit, die durch ein Programm oder einen Programmteil repräsentiert ist. Für den Begriff "Datenpuffer" wird in diesem Zusammenhang häufig auch die Bezeichnung "Mailbox" gebraucht.

Aus der EP-A-0 031 484 ist bekannt, Daten in einem verteilten System gepuffert zu übertragen, wozu Pufferelemente eingesetzt werden, an die zwischen mehreren Systemen zu sendende oder zu empfangende Daten übergeben werden.

Ein Datenpuffer besteht aus einer Anzahl gleich großer Puffer als Zwischenspeicher und aus einer Pufferverwaltung. Die Programme können, vermittelt durch Betriebssystemaufrufe, Datenbereiche in den Datenpuffer schreiben und Datenbereiche aus dem Datenpuffer lesen. Durch die Betriebssystemaufrufe wird entweder der Datenbereich des Programms in einen leeren Datenbereich des Datenpuffers kopiert oder der am längsten im Datenpuffer enthaltene, gefüllte Datenbereich, wird in den Datenbereich des Programms kopiert.

Versucht ein Programm aus einem Datenpuffer zu lesen, der keinen gefüllten Pufferbereich enthält, so wird das Programm am Datenpuffer wartend. Soll der Datenbereich eines Programms in einen Datenpuffer geschrieben werden, der kein leeres Datenelement enthält, wird das Programm ebenfalls am Datenpuffer wartend. Eine detaillierte Beschreibung dieses Vorgangs findet sich bei Peter D. Lorenz, Konrad Mauch, "Real-time microcomputer system design", McGraw-Hill Book Company, New York, 1987. Dort ist die Bezeichnung "Channel" für Datenpuffer bzw. Mailbox gewählt.

Um datenpufferinterne Inkonsistenzen zu vermeiden, dürfen in prozeduralen Betriebssystemen die Lese- und Schreibaufrufe für einen Datenpuffer nicht durch andere, den gleichen Datenpuffer betreffende Lese- und Schreibaufrufe unterbrochen werden. Werden - wie üblich - in der Interruptbearbeitung, bzw. in einer höherprioren Task, die aus der Interruptbearbeitung heraus gestartet wurde, solche Aufrufe gestattet, so ist die Konsistenz des Datenpuffers durch eine Interruptsperre während der Bearbeitung, insbesondere während der gesamten Kopierzeit, zu garantieren. Die wichtige maximale Interruptsperrzeit eines Systems kann damit von der Länge der zu übertragenden Datenbereiche abhängen. Da andererseits die maximale Interruptsperrzeit in einem Echtzeitsystem in der Regel vorgegeben ist, können an so organisierte Datenpuffer nur Datenbereiche bis zu einer gewissen maximalen Länge übergeben werden.

Dieses Problem wird bisher dadurch gelöst, daß im Datenpuffer nur Zeiger auf die tatsächlichen Datenbereiche übergeben werden. Die Datenbereiche selbst befinden sich dabei in einem gemeinsamen Datenbereich der beteiligten Programme. Bei diesem Vorgehen wird zwar auf Kopiervorgänge häufig verzichtet und damit unter Umständen Laufzeit eingespart, dafür erhöht sich aber der Programmieraufwand und die Programmiersicherheit wird deutlich verringert, da alle beteiligten Programme jederzeit - also auch, wenn ihnen ein Datenbereich nicht oder nicht mehr zugeordnet ist - prinzipiell Zugriff auf diesen haben. Die aus entsprechenden Programmierfehlern resultierenden Systemfehler sind gerade in komplexeren Systemen erfahrungsgemäß sehr schwierig zu lokalisieren.

Aufgabe der Erfindung ist es, die Kommunikation zwischen Programmen und Datenpuffer so zu organisieren, daß die maximale Interruptsperrzeit unabhängig von der Länge der zu übertragenden Datenbereiche wird, wobei die Konsistenz des Datenpuffers gewährleistet ist.

Diese Aufgabe wird dadurch gelöst, daß
e) der Datenpuffer aus einem Datenpuffer-Verwaltungsblock und zwei Datenpufferbereichen besteht, wobei die Datenpufferbereiche in einzelne Datenelemente vorgebbarer Kapazität unterteilbar sind und wobei der erste Datenpufferbereich Empfangselemente, der zweite Datenpufferbereich Sendeelemente enthält,
f) Daten sowohl zwischen sendebereiten und empfangsbereiten Programmen, als auch zwischen sende- oder empfangsbereiten Programmen und dem Datenpuffer austauschbar sind,
g) eine Sperre der Interruptfunktion der Datenverarbeitungsanlage während des Einkopplungsvorganges oder Auskopplungsvorganges der Datenelemente aus dem jeweiligen Datenpufferbereich wirksam geschaltet wird,
h) ein jeweiliger Datenaustausch ohne Sperren des Interrupts durchgeführt wird.

Die Datenbereiche des Datenpuffers können dabei intern aus zwei Warteschlangen bestehen, in denen die gefüllten Datenelemente als Sendeelemente in einer sogenannten "Sendewarteschlange", bzw. die leeren Datenelemente als Empfangselemente in einer sogenannten Empfangswarteschlange" aufgefädelt sind. Mit anderen Worten: Die Datenelemente können nach dem von Datenspeichersystemen bekannten First-in-first-out-Prinzip organisiert werden.

Am Datenpuffer können sich dabei sendebereite bzw, empfangsbereite Programme melden, die dann ihre Daten an vorhandene Empfangselemente übergeben bzw. von vorhandenen Sendeelementen übernehmen. Sind keine Empfangselemente bzw. Sendeelemente vorhanden, so werden die Programme am Datenpuffer wartend bis dieser über ein entsprechendes Datenelement verfügt, oder sich ein entsprechendes empfangsbereites bzw. sendebereites Partnerprogramm meldet.

Der Datenaustausch zwischen einen Programm und einem vorhandenen Datenelement kann nach einer vorteilhaften Ausbildung der Erfindung dadurch geschehen, daß
a) jeweils zur Übergabe von Daten zwischen dem Dätenbereich eines sendebereiten oder empfangsbereiten Programms und dem Datenpuffer ein Datenelement aus dem jeweiligen Datenpufferbereich ausgekoppelt wird,
b) die Daten zwischen dem Datenbereich eines jeweiligen Programms und dem jeweiligen ausgekoppelten Datenelement kokopiert werden,
c) die Datenelemente in die entsprechenden Datenpufferbereich eingekoppelt werden,
d) das Aus- und Einkoppeln der Datenelemente in die Datenpufferbereiche jeweils unter Sperren des Interrupts vorgenommen wird.

Meldet sich also ein Programm an einem Datenpuffer, beispielsweise indem es eine Anforderung in Form eines Datums an diesen übergibt, so wird zunächst ein Empfangselement aus der Empfangswarteschlange entnommen. Dieser Vorgang muß zur Konsistenzerhaltung des Datenpuffers unter Sperren des Interrupts (= Interruptsperre) durchgeführt werden. Danach enthält der Datenpuffer zwar ein Datenelement weniger, ist aber prinzipiell konsistent und kann damit mit dem gleichen Aufruf nochmal angesprochen werden. Die Interruptsperre kann also aufgehoben werden. Die Datenübertragung in das Datenpufferelement geschieht dann ohne Interruptsperre. Danach wird das nun volle Datenelement an das Ende der Sendewarteschlange angehängt. Dieser Vorgang muß zur Konsistenzerhaltung des Datenpuffers wieder unter Interruptsperre ablaufen. Das Lesen aus dem Datenpuffer geschieht entsprechend.

Wenn jedoch ein sendebereites bzw. ein empfangsbereites Programm am Datenpuffer wartend wird, weil kein Empfangselement oder Sendeelement vorhanden ist, dann können die Daten eines jeweiligen Programms auch an ein, sich am Datenpuffer meldendes empfangsbereites bzw. sendebereites Programm übergeben werden. Auch in diesem Fall ist der Datenaustausch ohne Sperren des Interrupts durchführbar.

Ein Ausführungsbeispiel der Erfindung wird im folgenden anhand der Zeichnung näher beschrieben. Dabei zeigen:
- FIG 1: den strukturellen Aufbau einer Task,
- FIG 2: in einer Rangliste aufgereihte Task-Kontroll-Blöcke,
- FIG 3: die Organisationsstruktur einer Mailbox,
- FIG 4: die Organisationsstruktur eines Mailbox-Verwaltungsblocks,
- FIG 5: die Organisationsstruktur eines Datenelements,
- FIG 6: die Organisationsstruktur eines Task-Kontroll-Bocks,
- FIG 7: den Übertrag von Daten aus einer Task in ein Empfangselement,
- FIG 8: die Einreihung eines Sendeelements in die Sendewarteschlange,
- FIG 9: den Hauptzweig eines Ablaufplans für die Datenübertragung von einer Task zu Mailbox,
- FIG 10: den Hauptzweig eines Ablaufplans für die Datenübertragung von der Mailbox zur Task,
- FIG 11: einen vollständigen Ablaufplan für die Datenübertragung von einer Task zur Mailbox,
- FIG 12: einen vollständigen Ablaufplan für die Datenübertragung von der Mailbox zur Task.

Da sich insbesondere in Bezug auf Systemprogramme oder Betriebssysteme für den Begriff "Programm" der Begriff "Task" und für den Begriff "Datenpuffer" in diesem Zusammenhang der Begriff "Mailbox" eingebürgert hat, werden im folgenden ebenfalls diese Bezeichnungen verwendet.

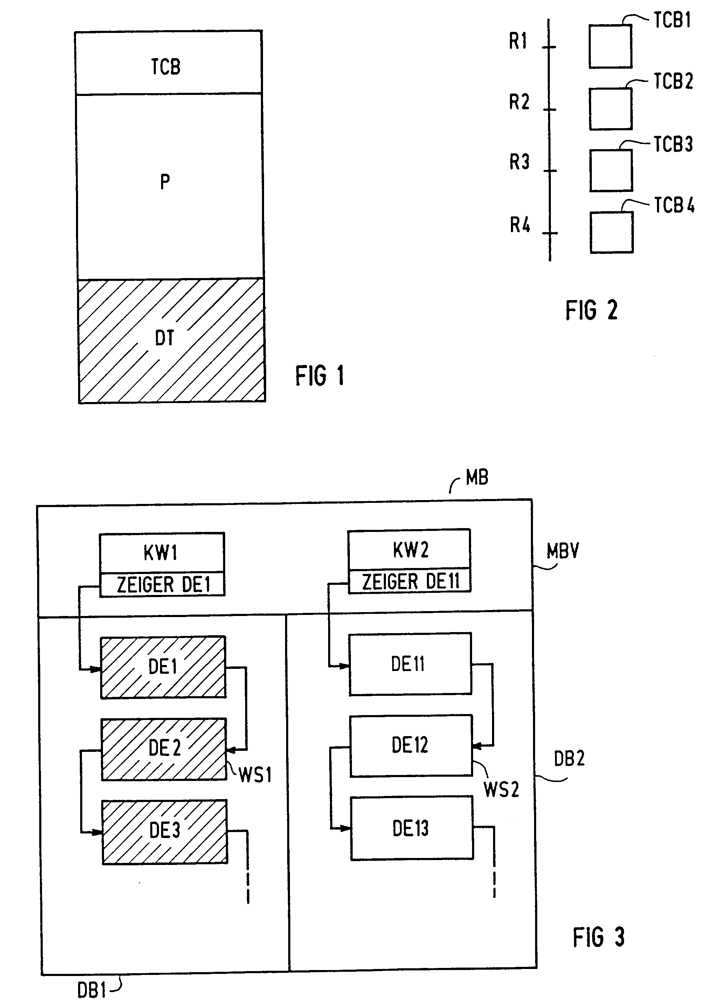

FIG 1 zeigt den strukturellen Aufbau einer Task T. Sie besteht aus einem Task-Kontroll-Block TCB, einem Programmteil P und dem Datenteil DT. Der Begriff Datenteil DT der Task ist so zu verstehen, daß die Task Zugriff auf diese Daten hat. Der Datenteil DT kann sowohl "private" Daten, die nur einer jeweils bestimmten Task zugeteilt sind, als auch "cammon"-Daten oder einen memory mapped Eingangs-Ausgangs-Datenbereich etc. umfassen. Zur Abarbeitung eines Gesamtprogramms sollen mehrere Tasks zur Lösung verschiedener Teilaufgaben parallel eingesetzt werden, wobei sie jeweils ihre berechneten oder in anderer Weise ermittelten Daten in ihrem eigenen Datenbereich DT ablegen. Eine weitere Task T, im folgenden als Anzeigetask bezeichnet, kann dabei dazu vorgesehen sein, die von den übrigen Tasks T ermittelten Daten beispielsweise auf einem Monitor auszugeben. Zu diesem Zweck überträgt jede Task T Daten aus ihrem jeweiligen Datenteil DT in den Datenbereich einer Mailbox MB und die Anzeigetask kann dann den Dateninhalt der Mailbox MB auf dem Monitor zur Anzeige bringen.

Ein in der Datenverarbeitungsanlage für die Programmabarbeitung vorgesehener Prozessor kann jedoch jeweils nur eine Task T bearbeiten. Deswegen werden alle zur Abarbeitung des Gesamtprogramms vorgesehenen Tasks in einer Rangliste angeordnet. Dabei genügt es, die Task-Kontroll-Blöcke TCB in der Rangliste zu halten, da diese die jeweils zugehörige Task verwalten.

FIG 2 zeigt in einer Rangliste aufgereihte Task-Kontroll-Blöcke TCB1...TCB4 in den Rangstufen R1...R4. In einem solchen Task-Kontroll-Block TCB ist beispielsweise festgehalten, wie weit das zugehörige Programm P bereits abgelaufen ist, welche Priorität die Task T hat, und es werden bei einem Interrupt die Registerinhalte des Prozessors im Register des Task-Kontroll-Blocks TCB gerettet, etc. .

Das Betriebssystem sorgt dafür, daß jeweils die an erster Stelle der Rangliste befindliche Task T (die Task mit höchster Priorität) abgearbeitet wird. Dieses Verfahren wird deshalb auch als prioritätsgesteuertes Multitasking-Verfahren bezeichnet.

Eine wesentliche Eigenschaft eines solchen Systems, bzw. eines Mikroprozessor-Systems überhaupt, ist es, daß bei bestimmten Ereignissen ein Interrupt, also eine Unterbrechung des Programmablaufs vorgenommen werden kann. Muß beispielsweise nach einem vorgegebenen Zeitschema die erste Task gestartet werden, während die dritte Task gerade bearbeitet wird, so kann die Programmabarbeitung der dritten Task mittels Interrupt unterbrochen werden, nachdem die wichtigsten Daten der dritten Task für eine spätere Fortsetzung in deren Task-Kontroll-Block TCB3 festgehalten wurden.

Bei der bisherigen Mailbox-Drganisation (vgl. den oben erwähnten Stand der Technik) darf eine solche Unterbrechung aber gerade dann nicht stattfinden, wenn die dritte Task gerade ihre Daten an die Mailbox überträgt, da sonst nicht alle neu ermittelten Daten aus dem Datenbereich DT der dritten Task vollständig übertragen werden. Eine korrekte Zeigerstellung in der Mailbox wäre damit nicht möglich. Dies führte unweigerlich zu einer völligen Inkonsistenz der Mailbox und damit zu einer Nichtansprechbarkeit der Mailbox durch z.B. die erste Task.

FIG 3 zeigt die hier beschriebene Organisationsstruktur einer Mailbox MB. Sie besteht aus einem Mailbox-Verwaltungsblock MBV und zwei Datenbereichen DB1, DB2. Die Datenbereiche DB1,DB2 sind in einzelne Datenelemente DE1...DE3,DE11...DE13 unterteilt, deren Datenfassungsvermögen so ausgelegt ist, daß sie jeweils die betroffenen Daten aus dem Datenteil DT einer Task T aufnehmen können.

Dem Datenbereich DB1 sind jeweils die vollen Datenelemente, kurz Sendelemente DE1...DE3 (schraffiert), dem Datenbereich DB2 die leeren Datenelemente, kurz Empfangselemente DE11...DE13, zugeordnet. Die Sendeelemente DE1...DE3 und die Empfangselemente DE11 ...DE13 sind dabei in Form einer Warteschlange organisiert, wobei beispielsweise jedes Datenelement DE1...DE3,DE11...DE13, einen Verweis (Zeiger) auf das nächstfolgende Datenelement beinhaltet. Die spezielle Organisation der Warteschlange bleibt dabei ins belieben des Fachmanns gestellt.

Der Mailbox-Verwaltungsblock MBV besteht aus einem Kopf für die Warteschlange KW1, das ist die Warteschlange der Sendemente DE1...DE3 und einem Kopf für die Warteschlange KW2, das ist die Warteschlange der Empfangselemente DE11...DE13. Jeder der beiden Warteschlangenköpfe KW1 (zu Warteschlange WS1), KW2 (zu Warteschlange WS2) besitzt einen Bereich für einen Zeiger der auf das erste im jeweiligen Datenbereich DB1 bzw. DB2 befindliche Datenelement DE1 bzw. DEll verweist, falls ein solches vorhanden ist.

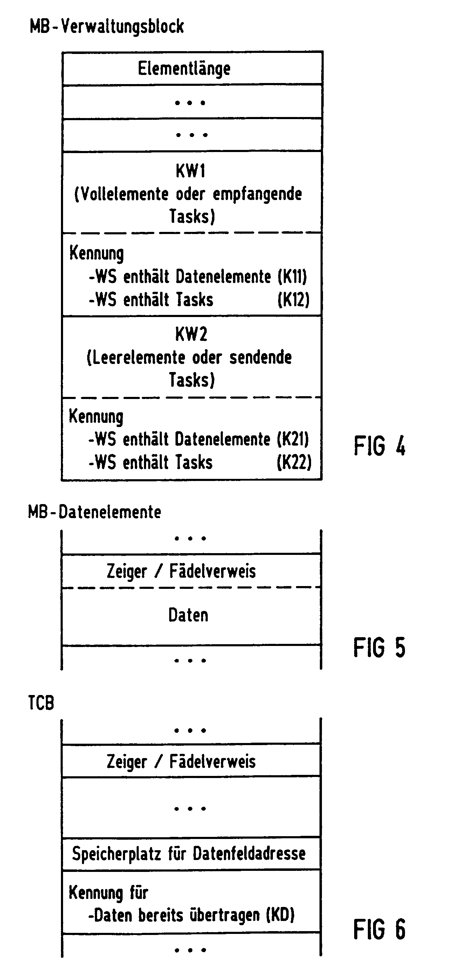

Der Zeiger eines Warteschlangenkopfes KW1, KW2 kann aber auch auf eine Task T bzw. auf einen Task-Kontroll-Block TCB verweisen. Ist beispielsweise kein Sendeelement DE1...DE3 im Datenbereich DB1, aber eine Task T, beispielsweise die eingangs erwähnte Anzeigetask, wartet auf Daten aus der Mailbox MB, so kann der Zeiger des Warteschlangenkopfes KW1 auch auf die wartende Task bzw. den wartenden Task-Kontroll-Block TCB zeigen. Die Warteschlange zum Warteschlangenkopf KWl kann also entweder volle Datenelemente oder auf Daten wartende Tasks T enthalten. Entsprechend kann der Warteschlangenkopf KW2 entweder Empfangselemente DE11...DE13 oder sendende Task, bzw. deren Task-Kontroll-Blöcke TCB verwalten. Warten mehrere Tasks so können diese, bzw. die zugehörigen Task-Kontroll-Blöcke, ebenso in Form einer Warteschlange aufgereiht werden. Dies kann sowohl nach dem First-in-first-out-Prinzip als auch nach der Rangfolge der Tasks realisiert werden. Anhand der FIG 4 wird die Verwaltung von Tasks oder Datenelementen durch den Mailbox-Verwaltungsblock MBV eingehender beschrieben.

FIG 4 zeigt die Organisationsstruktur des Mailbox-Verwaltungsblocks MBV. Der Mailbox-Verwaltungsblock MBV enthält insbesondere ein Datum für die Elementlänge, also das Datenfassungsvermögen eines Datenelements. Über die Erfindung hinausgehende Organisationsprinzipien des Mailbox-Verwaltungsblocks werden hier der Übersichtlichkeit halber nicht beschrieben. Weiter enthält der Mailbox-Verwaltungsblock MBV die Warteschlangenköpfe KW1, KW2. Der Warteschlangenkopf KW1 verwaltet dabei die Sendelemente DE1...DE3 oder empfangende, also auf Daten wartende Tasks. Befinden sich in der Warteschlange WS des Warteschlangenkopfes KW1 Datenelemente, so enthält der Warteschlangenkopf KW1 beispielsweise die Kennung Kll. Enthält die Warteschlange WS des Warteschlangenkopfes KW1 Tasks, so enthält der Warteschlangenkopf KW1 die Kennung K12. Entsprechend werden vom Warteschlangenkopf KW2 der für die Empfangselemente DE11...DE13 bzw. für sendende also auf Datenübergabe an die Mailbox MB wartende Tasks bzw. Task-Kontroll-Blöcke zuständig ist, die Kennung K21 für Datenelemente bzw. die Kennung K22 für Tasks.

FIG 5 zeigt die Organisationsstruktur eines Datenelements DE1 ...DE3, DE11...DE13. Wie oben bereits beschrieben, enthält es einen Zeiger bzw. einen Fädelverweis zur Einordnung in eine der Warteschlangen WS sowie ein Feld zur Aufnahme von Daten.

FIG 6 zeigt die Organisationsstruktur eines Task-Kontroll-Blocks TCB. Auch dieser Task-Kontroll-Block enthält einen Zeiger bzw. einen Fädelverweis zur Einordnung in eine Warteschlange, außerdem einen Speicherplatz für eine Datenfeldadresse, sowie eine Kennung KD, die aussagt, ob Daten bereits übertragen wurden.

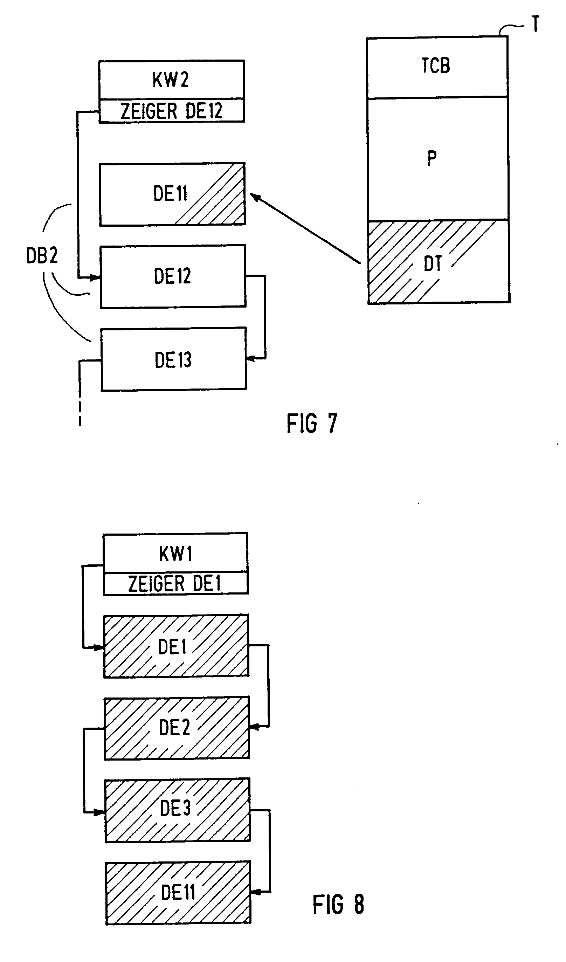

FIG 7 zeigt den Ubertrag von Daten aus einer Task T in ein Empfangselement. Von der aus FIG 3 bekannten Mailbox MB ist der Warteschlangenkopf KW2 mit dem Datenbereich DB2, der die Datenelemente DE11...DE13 beinhaltet, dargestellt. Aus der Task T, die sich mit einem Schreibaufruf an der Mailbox MB (FIG 3) gemeldet hat, sollen Daten des Datenteils DT an ein Datenelement DE übertragen werden. Dazu muß vom Warteschlangenkopf KW2 ein Empfangselement, z.B. das erste Element DE11, freigegeben werden. Zur Konsistenzerhaltung der Mailbox MB muß diese Freigabe während einer Interruptsperre vorgenommen werden. Während also die Interruptfunktion unwirksam geschaltet ist, wird der Zeiger des Warteschlangenkopfes KW2 vom Datenelement DEll auf das nächstfolgende Datenelement DE12 gerichtet. Damit ist das Datenelement DE11 freigegeben und die Mailbox ist konsistent, d.h. der Warteschlangenkopf KW2 verwaltet korrekt die Datenelemente DE12 und DE13. Nach der Auskopplung des Empfangselements DE11 kann die Sperre des Interrupts wieder aufgehoben werden und die Mailbox kann weitere Schreib- und Leseaufrufe anderer Tasks bedienen.

In das ausgekoppelte Empfangselement DE11 können nun die Daten der Task T aus dem Datenteil DT übertragen werden, wie durch die Schraffierung angedeutet ist. Nachdem die Daten in das Datenelement DE11 vollständig übertragen wurden, kann dieses Datenelement DE11 nunmehr als Sendelement in die Warteschlange der Sendeelemente DE1...DE3 als viertes Datenelement eingereiht werden. Dieser Sachverhalt ist in FIG 8 dargestellt.

FIG 8 zeigt die Einreihung eines Sendeelements in die Sendewarteschlange. Von der aus FIG 3 bekannten Mailbox MB ist nunmehr in FIG 8 der Warteschlangenkopf KW1 für die Sendeelemente bzw. für empfangende Tasks gezeigt. Dieser Warteschlangenkopf hat bisher die Sendeelemente DE1...DE3 in Form einer Warteschlange verwaltet. Das ehemals leere Datenelement DE11 wird nun als Sendeelement DE11 an das bisher letzte Sendeelement DE3 angehängt. Dieses Anhängen muß wieder unter Interruptsperre vorgenommen werden. Nachdem das Sendeelement DE11 an die Warteschlange der Sendeelemente DE1...DE3 eingehängt ist, ist die Warteschlange wieder konsistent, und die Sperre des Interrupts kann wieder aufgehoben werden.

Die Übertragung von Daten aus Empfangselementen DE11...DE13 (FIG 3) der Mailbox in den Datenteil DT einer Tasks geschieht analog.

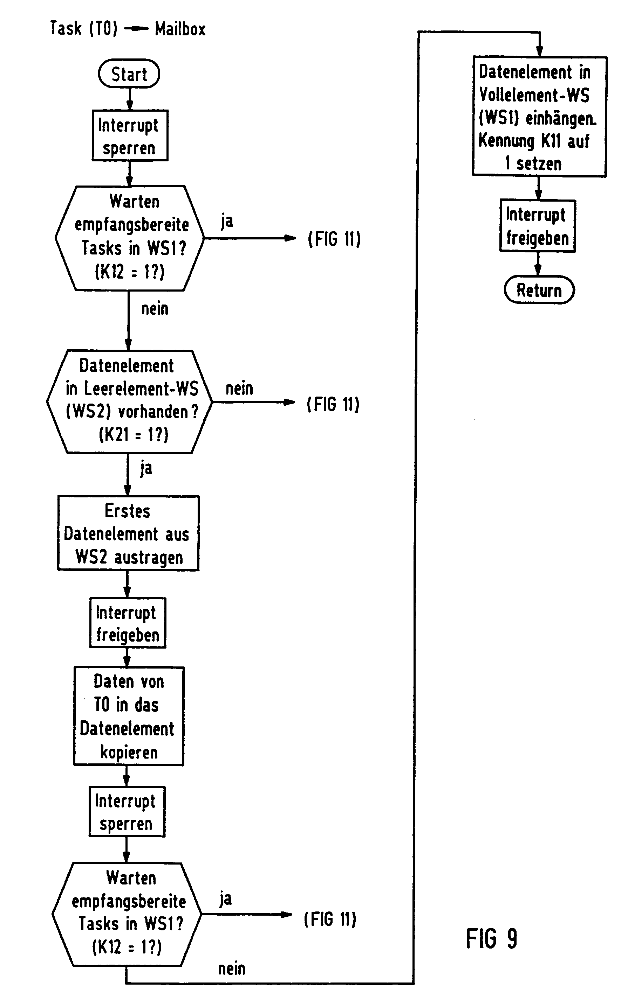

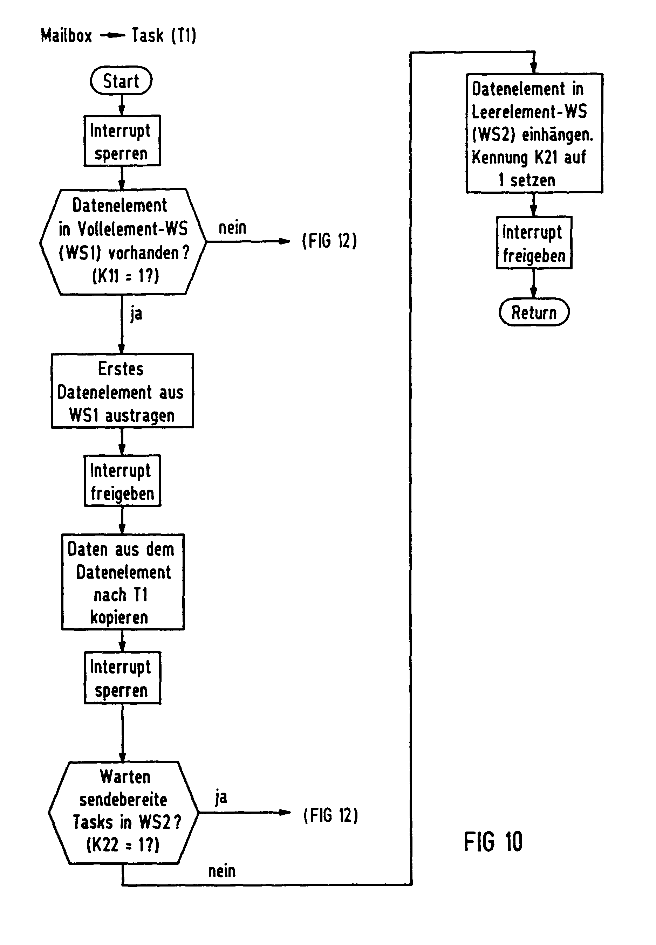

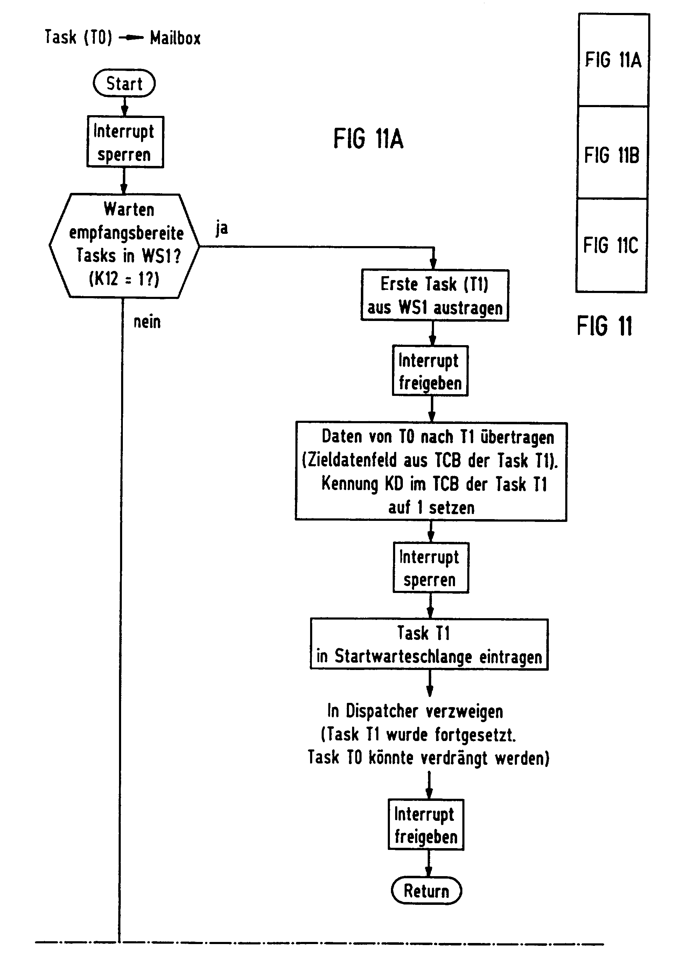

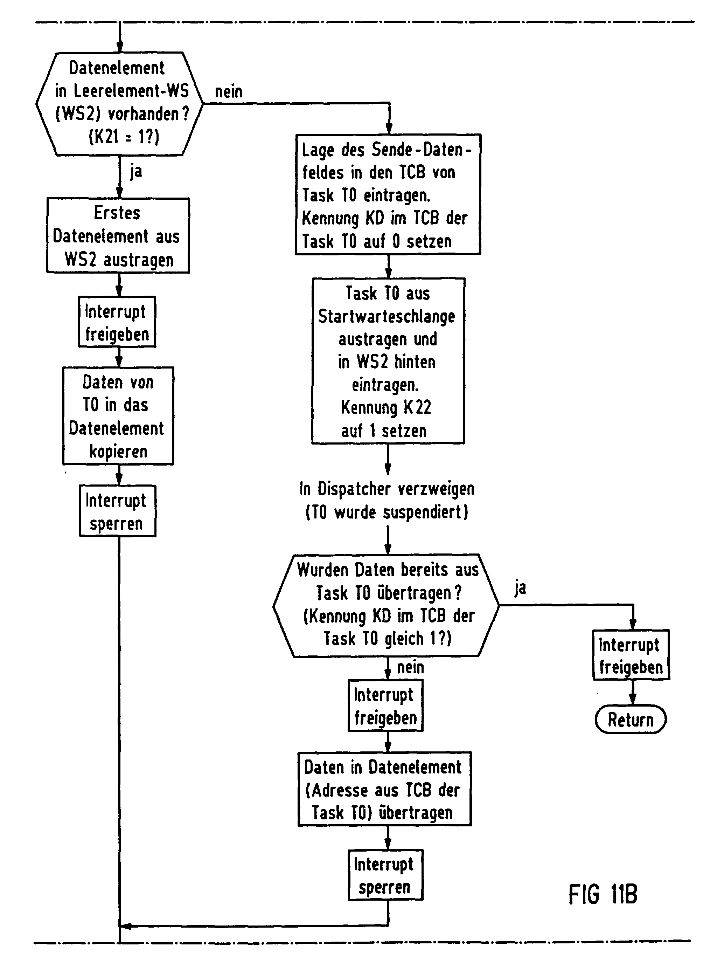

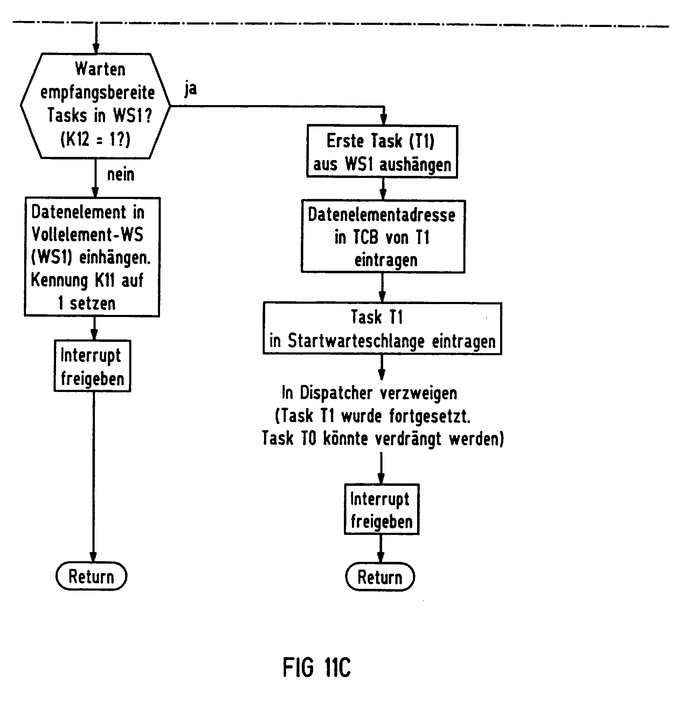

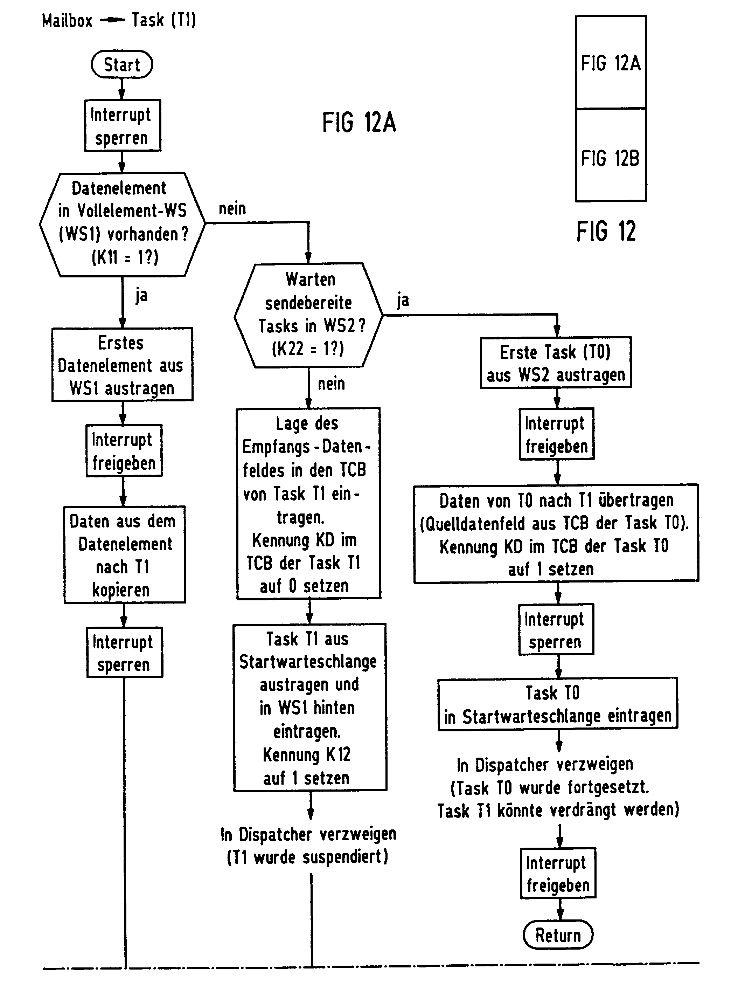

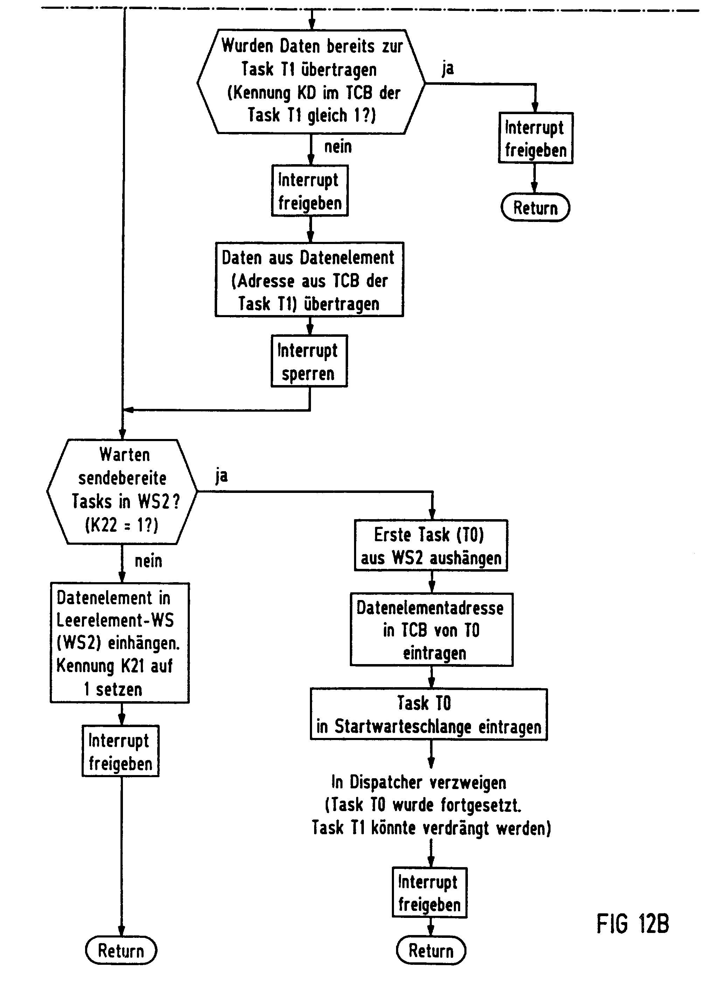

FIG 9 beschreibt den Hauptzweig eines Ablaufplans für die Datenübertragung von einer Task T zur Mailbox MB und FIG 10 den Hauptzweig eines Ablaufplans für die Datenübertragung von der Mailbox MB an eine Task. In den Figuren 11 und 12 ist jeweils ein vollständiger Ablaufplan für die Datenübertragung von einer Task T zur Mailbox MB bzw. von der Mailbox MB zu einer Task T dargestellt. Dabei ist die Taskkoordination, d.h. das Arten von lesenden Tasks an einer leeren Mailbox MB sowie das Warten von schreibenden Tasks an einer vollen Mailbox MB, berücksichtigt. In Verbindung mit dem bisher beschriebenen Ausführungsbeispiel sind diese Ablaufpläne für den Fachmann aus sich heraus verständlich. Auf eine nähere Beschreibung dieser Ablaufpläne wird deshalb verzichtet.

## Patentansprüche

1. Verfahren zum gepufferten Datenaustausch zwischen Programmen einer Datenverarbeitungsanlage mit folgenden Merkmalen:
a) Die Programme (T) verfügen über einen Datenbereich (DT), in dem die vom jeweiligen Programm (T) benutzbaren Daten abgelegt sind,
b) die in einem jeweiligen Datenbereich (DT) eines sendebereiten Programms (T) abgelegten Daten sind an einen Datenpuffer (MB) übergebbar,
c) die im Datenpuffer (MB) abgelegten Daten sind von empfangsbereiten Programmen (T) abrufbar,
d) zum Datenaustausch werden sendebereite und/oder empfangsbereite Programme (T) am Datenpuffer (MB) gemeldet,
**dadurch gekennzeichnet,** daß
e) der Datenpuffer (MB) aus einem Datenpuffer-Verwaltungsblock (MBV) und zwei Datenpufferbereichen (DB1,DB2) besteht, wobei die Datenpufferbereiche (DB1,DB2) in einzelne Datenelemente (DE1...DE3, DE11...DE13) vorgebbarer Kapazität unterteilbar sind und wobei der erste Datenpufferbereich (DB1) Empfangselemente (DE11...DE13), der zweite Datenpufferbereich (DB2) Sendeelemente (DE1...DE3) enthält,
f) Daten sowohl zwischen sendebereiten und empfangsbereiten Programmen (T), als auch zwischen sende- oder empfangsbereiten Programmen (T) und dem Datenpuffer (MB) austauschbar sind,
g) eine Sperre der Interrupt-Funktion der Datenverarbeitungsanlage lediglich während des Einkopplungsvorganges oder Auskopplungsvorganges der Datenelemente (DE1...DE3, DE11...DE13) aus dem jeweiligen Datenpufferbereich (DB1, DB2) wirksam geschaltet wird,
h) ein jeweiliger Datenaustausch ohne das Sperren des Interrupts durchgeführt wird.

2. Verfahren nach Anspruch 1, **dadurch gekennzeichnet**, daß bei Fehlen eines Empfangselements (DE11... DE13) ein am Datenpuffer (MB) gemeldetes, sendebereites Programm (T), am Datenpuffer (MB) wartend werden kann, bis ein Empfangselement (DE11...DE13) oder ein empfangsbereites Programm (T) vorhanden ist.

3. Verfahren nach Anspruch 1, **dadurch gekennzeichnet**, daß bei Fehlen eines Sendeelements (DE1... DE3) ein am Datenpuffer (MB) gemeldetes, empfangsbereites ProGramm (T) wartend werden kann, bis ein Sendeelement (DE1...DE3) oder ein sendebereites Proaramm (T) vorhanden ist.

4. Verfahren nach einem der vorstehenden Ansprüche, **dadurch gekennzeichnet,** daß
a) jeweils zur Übergabe von Daten zwischen dem Datenbereich (DT) eines sendebereiten oder empfangsbereiten Programms (T) und dem Datenpuffer (MB) ein Datenelement (DE1...DE3, DE11...DE13) aus dem jeweiligen Datenpufferbereich (DB1, DB2) ausgekoppelt wird,
b) die Daten zwischen dem Datenbereich (DT) eines jeweiligen Programmes und dem jeweiligen ausgekoppelten Datenelement (DE1...DE3,DE11...DE13) kopiert werden,
c) die Datenelemente (DE1...DE3,DE11...DE13) in die entsprechenden Catenpufferbereiche (DB1,DB2) eingekoppelt werden,
d) das Aus- und Einkoppeln der Datenelemente (DE1...DE3, DE11...DE13) in die Datenpufferbereiche (DB1,DB2) jeweils unter Sperren des Interrupts vorgenommen wird.

## Claims

1. Method for buffered data exchange between programs of a data processing system, having the following features:
a) the programs (T) have at their disposal a data area (DT), in which the data which can be used by the respective program (T) is stored;
b) the data which is stored in a respective data area (DT) of a program (T) which is ready to send can be transferred to a data buffer (MB);
c) the data which is stored in the data buffer (MB) can be retrieved by programs (T) which are ready to receive;
d) for the data exchange, programs (T) which are ready to send and/or ready to receive are reported at the data buffer (MB); characterised in that
e) the data buffer (MB) comprises a data-buffer management block (MBV) and two data buffer areas (DB1, DB2), with it being possible for the data buffer areas (DB1, DB2) to be subdivided into individual data elements (DE1...DE3, DE11...DE13) of predeterminable capacity, and with the first data buffer area (DB1) containing receiving elements (DE11...DE13) and the second data buffer area (DB2) containing sending elements (DE1...DE3);
f) data can be exchanged not only between programs (T) which are ready to send and programs (T) which are ready to receive, but also between programs (T) which are ready to send or ready to receive and the data buffer (MB);
g) an inhibitor of the interrupt-function of the data processing system is enabled only during the process of coupling in or the process of coupling out the data elements (DE1...DE3, DE11...DE13) from the respective data buffer area (DB1, DB2);
h) a respective data exchange is performed without inhibiting the interrupt.

2. Method according to claim 1, characterised in that in the absence of a receiving element (DE11...DE13), a program (T) which is reported at the data buffer (MB) and is ready to send can go into the waiting state at the data buffer (MB) until a receiving element (DE11...DE13) or a program (T) which is ready to receive is available.

3. Method according to claim 1, characterised in that in the absence of a sending element (DE1...DE3), a program (T) which is reported at the data buffer (MB) and is ready to receive can go into the waiting state until a sending element (DE1...DE3) or a program (T) which is ready to send is available.

4. Method according to one of the preceding claims, characterised in that
a) in order to transfer data between the data area (DT) of a program (T) which is ready to send or ready to receive and the data buffer (MB), a data element (DE1...DE3, DE11...DE13) is uncoupled from the respective data buffer area (DB1, DB2) in each case;
b) the data is copied between the data area (DT) of a respective program and the respective uncoupled data element (DE1...DE3, DE11...DE13);
c) the data elements (DE1...DE3, DE11...DE13) are coupled into the corresponding data buffer areas (DB1, DB2);
d) the uncoupling and coupling-in of the data elements (DE1...DE3, DE11...DE13) into the data buffer areas (DB1, DB2) are performed whilst inhibiting the interrupt in each case.

## Revendications

1. Procédé d'échange par mémoire tampon de données entre des programmes d'une installation de traitement de données, présentant les caractéristiques suivantes :
a) les programmes (T) disposent d'une zone de données (DT), dans laquelle sont mémorisées les données utilisables par le programme respectif (T),
b) on peut transférer les données mémorisées dans une zone de données (DT) d'un programme (T) prêt pour l'émission à un tampon de données (MB),
c) on peut appeler les données mémorisées dans le tampon de données (MB) par des programmes (T) prêts pour la réception,
d) on signale, pour l'échange de données, des programmes (T) prêts pour l'émission et/ou prêts pour la réception dans le tampon de données (MB),
caractérisé par le fait que
e) le tampon de données (MB) est constitué d'un bloc de gestion (MBV) dudit tampon de données et de zones (DB1, DB2) du tampon de données, les zones (DB1, DB2) du tampon de données pouvant être subdivisées en des éléments individuels de données (DE1 à DE3, DE11 à DE13) ayant une capacité pouvant être prédéterminée, la première zone (DB1) du tampon de données contenant des éléments de réception (DE11 à DE13), tandis que la seconde zone (DB2) du tampon de données contient des éléments d'émission (DE1 à DE3),
f) on peut échanger des données aussi bien entre des programmes (T) prêts pour l'émission et prêts pour la réception, qu'entre des programmes (T) prêts pour l'émission et pour la réception et le tampon de données (MB),
g) on ne rend actif un blocage de la fonction d'interruption de l'installation de traitement de données que pendant l'opération d'entrée ou l'opération de sortie des éléments de données (DE1 à DE3, DE11 à DE13) à partir de la zone respective (DB1, DB2) du tampon de données,
h) on effectue un échange de données sans le blocage de l'interruption.

2. Procédé suivant la revendication 1, caractérisé par le fait qu'en absence d'un élément de réception (DE11 à DE13), on peut mettre en attente un programme (T), signalé dans le tampon de données (MB) et prêt pour l'émission, dans le tampon de données jusqu'à ce qu'un élément de réception (DE11 à DE13) ou un programme prêt (T) pour la réception soit présent.

3. Procédé suivant la revendication 1, caractérisé par le fait qu'en absence d'un élément d'émission (DE1 à DE3), on peut mettre en attente un programme (T) signalé dans le tampon de données (MB) et prêt pour la réception jusqu'à ce qu'un élément d'émission (DE1 à DE3) ou un programme (D) prêt pour l'émission soit présent.

4. Procédé suivant l'une des revendications précédentes, caractérisé par le fait que
a) pour le transfert de données entre la zone de données (DT) d'un programme (T) prêt pour l'émission ou pour la réception et le tampon de données (MB), on sort un élément de données (DE1 à DE3; DE11 à DE13) de la zone respective (DB1,DB2) du tampon de données,
b) on copie les données entre la zone de données (DT) d'un programme et l'élément de sortie de données (DE1 à DE3; DE11 à DE13),
c) on introduit les éléments de données (DE1 à DE3; DE11 à DE13) dans les zones correspondantes (DB1,DB2) du tampon de données, et
d) on procède à la sortie et à l'introduction des éléments de données (DE1 à DE3; DE11 à DE13) dans les zones (DB1,DB2) du tampon de données en bloquant l'interruption.
